Europäisches Patentamt

European Patent Office

Office européen des brevets

(11) Veröffentlichungsnummer: **0 429 399 A2**

## (12) EUROPÄISCHE PATENTANMELDUNG

(21) Anmeldenummer: 90810886.3

(22) Anmeldetag: 19.11.90

(51) Int. Cl.5: **G01L 5/00**

(30) Priorität: 20.11.89 CH 4153/89
20.11.89 CH 4154/89
08.03.90 CH 737/90

(43) Veröffentlichungstag der Anmeldung:
**29.05.91 Patentblatt 91/22**

(84) Benannte Vertragsstaaten:
**AT CH DE ES FR IT LI NL**

(71) Anmelder: **SCHLÄPFER MESSTECHNIK AG**
**Schlachthofstrasse 19**
**CH-8406 Winterthur(CH)**

(72) Erfinder: **Schläpfer, Bruno**
**Bruggwiesenstrasse 13**
**CH-8442 Hettlingen(CH)**
Erfinder: **Waser, Max P.**
**209 29th Street**
**Hermosa Beach, CA 90254(US)**

(74) Vertreter: **Breiter, Heinz**
**Patentanwalt H. Breiter AG**
**Schaffhauserstrasse 27 Postfach 1163**
**CH-8401 Winterthur(CH)**

(54) **Dehnungsmessung von metallischen Strukturen.**

(57) Eine Anordnung zur Dehnungsmessung dient dem elektrischen Messen positiver und negativer Dehnungen von metallischen Strukturen (39) an Pressen, insbesondere zur Ermittlung der Schliess- und/oder Zuhaltekräfte an Spritzgiess- und Druckgussmaschinen. Die Anordnung besteht aus einer Messlanze (10) in integrierter Bauweise. Diese Montagegarnitur verfügt über einen einends einen vorspannbaren Aufnehmer (20) eines dehungsempfindlichen, elektrische Signale erzeugenden Messelements. Der Aufnehmer (20) ist über ein Verbindungsrohr (14) drehfest mit einem andernends angeordneten Messwertumformergehäuse (12) verbunden, das eine autonome Auswertelektronik enthält und dem Erzeugen der Vorspannung dient.

Das Messelement mit Aufnehmer (20) und Signalkabel (22) ist auch separat in eine Bohrung (38) einer metallischen Struktur (39) einsetz- und dort fixier- und vorspannbar.

Die Vorspannung des Aufnehmers (20) eines in eine Messlanze (10) integrierten oder separaten Messelements erfolgt kontrolliert, bis ein vorausbestimmter Wert erreicht wird, der über der höchstmöglichen Arbeits-Dehnung der metallischen Struktur liegt.

Fig. 1

Fig. 4

## DEHNUNGSMESSUNG VON METALLISCHEN STRUKTUREN

Die Erfindung bezieht sich auf eine Anordnung zum elektrischen Messen positiver und negativer Dehnungen von metallischen Strukturen an Pressen, insbesondere zur Ermittlung der Schliess- und/oder Zuhaltekräfte an Spritzgiess- und Druckgussmaschinen. Weiter betrifft die Erfindung ein Messelement zum Messen positiver und negativer Dehnungen der vorstehenden Art und Verfahren zur Dehnungsmessung.

Eine Mehrzahl der heute verwendeten Pressen, beispielsweise Stanzmaschinen, Spritzgiess- und Druckgussmaschinen, ist automatisiert. Die Pressen sind vorwiegend mit zugeordneten Rechnern ausgerüstet, welche den Prozess steuern und überwachen. Auch sogenannte Expertensysteme, welche den Prozess adaptiv erfassen und dann optimieren können, sind in Betrieb. Alle diese Steuerungen benötigen in zunehmendem Masse Sensoren, um die Prozessdaten erfassen und weiterleiten zu können. Diese Sensorik kann sich in der industriellen Praxis nur durchsetzen, wenn sie montagefreundlich, wirtschaftlich und von praktisch unbegrenzter Lebensdauer ist.

Ein Prozessor oder Mikroprozessor steuert eine Maschine aufgrund verschiedenster Prozessparameter, z.B. Druck, Temperatur, Kraft oder Dehnung. Bisher wurden beispielsweise bei Betrachtungen des Spritzgiessens die Maschinenparameter Kraft und Dehnung kaum berücksichtigt. Insbesondere bei Leistungserhöhungen moderner Maschinen gebührt diesen Parametern erhöhte Aufmerksamkeit. Gesteigerte Spritzdrucke zum Herstellen hochwertiger Formteile beanspruchen die Schliess- und Zuhalteeinheiten in hohem Masse.

Die Schliess- und Zuhaltekrafte werden durch die Maschinenholme, welche als elastisch verformbare Zugstäbe ausgebildet sind, aufgenommen. Die meist vier Holme pro Presse müs sen wegen verschiedenen Formhöhen einstellbar sein. Dies erfolgt in der Regel mittels vier auf Gewindestäbe aufschraubbarer Justiermuttern, welche mittels eines Motors über eine Rollenkette verstellbar sind. Diese Verstellung ist erforderlich bei Formwechsel, Wartung oder Reparatur. Eine synchrone Justierung muss dabei jederzeit gewährleistet sein. Würde das Werkzeug der Presse durch ungleiche Holmkräfte nicht planparallel geschlossen, entstünde Ausschuss. Dies hätte wiederum einen erhöhten Werkzeugverschleiss zur Folge.

Uebernimmt wegen falscher Einstellung ein Holm nur einen Teil seiner Sollkraft, werden die anderen Holme mehr oder weniger stark überbelastet. Bei starker Ueberlastung können einzelne Holme bis zum Bruch überdehnt werden. Dieser Fall kann eintreten bei motorischer Verstellung der Formhöhe, durch abgenutzte Zahnräder, abrutschende Rollenketten oder schlechte, nicht plane Formhälften. In keinem Fall genügt eine einmalige Einstellung der Holmkräfte, diese müssen während des ganzen Prozesses überwacht und ggf. neu eingestellt werden.

Keine der bekannten Methoden zum Messen positiver und negativer Dehnungen von metallischen Strukturen an Pressen hat zu in allen Belangen guten Resultaten geführt und dabei auch wesentliche Randbedingungen wie Wirtschaftlichkeit und einfache Handhabung erfüllt.

Eine weitere bekannte Erfassungsmethode von Dehnungen von metallischen Strukturen, das Einsetzen eines elektronischen Wegpotentiometers in einen Holm einer Presse, schneidet noch ungünstiger ab. Wegen der ungenügenden Auflösung von elektronischen Wegpotentiometern muss eine lange Messonde in einen Holm geführt werden, damit ein genügend grosses Dehnungssignal erhalten werden kann. Um beispielsweise Rückschlüsse über die Schliesskraft zu ermöglichen, muss ein elektronischer Wegpotentiometer aufwendig kalibriert werden. Biegungen der langen Messonde und Temperatureinflüsse verfälschen das Messresultat.

Es ist auch bekannt, Dehnungsmessstreifen (DMS) als Widerstandsmuster auf eine metallische Oberfläche zu kleben und aufgrund der Widerstandsänderung Rückschlüsse auf die Dehnungen auf und in der Struktur zu ziehen. Diese Widerstandsmuster sind jedoch sehr exponiert, beschädigungsempfindlich, aufwendig anzubringen und weisen überdies Kriecherscheinungen auf. Da die Dehnungen nicht in, sondern an der metallischen Struktur gemessen werden, ist diese Methode für aussagekräftige und zuverlässige Messungen ungeeignet.

Schliesslich ist nach einer weiteren bekannten Erfassungsmethode von Dehnungen das Anbringen von Kraftmessringen zwischen einer festen Platte und einer Vorspannmutter bekannt. Dieses Messystem ist insbesondere im Hinblick auf die Kosten sehr aufwendig, weshalb der Einsatz oft nur auf einen von vier Holmen beschränkt wird. Die Messdaten dieses Holms werden auf die übrigen übertragen, was jedoch für eine zuverlässige Maschinenüberwachung ungenügend ist. Dies insbesondere im Hinblick darauf, dass exzentrische Kraftangriffe und Biegeanteile des Holms auf die Kraftmessringe das Messresultat verfälschen können. Wie bei andern vorstehend genannten Messmethoden muss auch bei der Anwendung von Kraftringen aufwendig kalibriert werden.

Der vorliegenden Erfindung liegt die Aufgabe zugrunde, eine Anordnung, ein all gemein verwendbares und für diese Anordnung besonders vorteilhaftes Messelement, ein Verfahren zur Dehnungsmessung mit der Anordnung und/oder dem Messelement der eingang genannten Art zu schaffen, welche durch ihre Einfachheit eine zusätzliche Betriebssicherheit, geringe Investitionskosten und einfache Handhabung bringen, eine sehr hohe Auflösung mit reproduzierbaren Messwerten gewährleisten, dem rauhen industriellen Betrieb widerstehen und eine hohe Lebensdauer haben. Keines der bisher bekannten Messysteme kann alle diese vorteilhaften Eigenschaften in sich vereinigen.

In bezug auf die Anordnung wird die Aufgabe erfindungsgemäss dadurch gelöst, dass diese aus einer Messlanze in integrierter Bauweise besteht, in welcher ein einends angeordneter, vorspannbarer Aufnehmer eines dehnungsempflindlichen, elektrische Signale erzeugenden Messelements über ein bezüglich seiner Länge verwendungsspezifisch ausgebildetes Verbindungsrohr andernends fest mit einem Messwertumformergehäuse verbunden ist, welches eine autonome Auswertelektronik enthält und dem Erzeugen der Vorspannung dient, wobei ein Signalkabel durch das Verbindungsrohr vom Aufnehmer zur Auswertelektronik und zu einem Stecker im Messwertumformergehäuse geführt ist. Weiterführende und spezielle Ausführungsformen ergeben sich aus den abhängigen Ansprüchen.

Der mit dem Verbindungsrohr, auch Distanzrohr genannt, verbundene Aufnehmer des dehnungsempfindlichen Messelements kann von beliebiger Bauart sein, wenn die obenstehenden Anforderungen erfüllt sind, insbesondere bezüglich der Empfindlichkeit, Reproduzierbarkeit der Messwerte, Robustheit und Langlebigkeit. Der Aufnehmer ist miniaturisiert, die linearen Dimensionen liegen in einer Grössenordnung von etwa 1 cm.

Das Verbindungsrohr weist neben dem integrierten Aufnehmer vorzugsweise eine Montageschraube auf, welche fest mit diesem Rohr verbunden oder mit diesem einstückig ausgebildet ist. Die Montageschraube ist dazu bestimmt, durch Drehen am andernends starr verbundenen Messwertumformermerkopf in ein festsitzendes Gegengewinde eingeschraubt zu werden, wodurch sich die Messlanze einstellbar in axialer Richtung verschiebt. Die Hebelverhältnisse sind so gewählt, dass selbst durch manuelles Drehen am Messwertumformergehäuse eine grosse Kraft auf das Montagegewinde einwirkt.

Da die Dehnungen mit höchster Zuverlässigkeit, Genauigkeit und Reproduzierbarkeit erfasst werden müssen, ist von wesentlicher Bedeutung, dass der Aufnehmer in der vorrichtungsspezifisch richtigen Tiefe angebracht werden kann. Zu diesem Zweck können Messlanzen mit verschieden langen Verbindungsrohren hergestellt werden. Bezüglich der Wirtschaftlichkeit, insbesondere in bezug auf die Lagerhaltungskosten, ist eine Messlanze mit einem längenverstellbaren Verbindungsrohr von Vorteil. Dies kann in an sich bekannter Weise z.B. durch gleich oder verschieden lange, steckbare Rohrstücke, teleskopartig ineinander verschiebund fixierbare Rohre oder ineinander verschraubbare Rohre erreicht werden. Alle Verlängerungsmechanismen müssen jedoch drehfest bleiben, damit die Vorspannung erzeugt werden kann.

In Richtung des Messumformergehäuses weist das Verbindungsrohr zweckmässig ein elastisches Element auf, vorzugsweise ausgebildet als ein teilweise in einer Ringnut versenkter O-Ring, welcher der Vibrationsdämpfung dient.

Das Messwertumformergehäuse besteht beispielsweise aus Aluminium und weist Kreuzlochbohrungen zum Montieren und allfälligen Vorspannen mit einem Werkzeug auf.

Die im Messwertumformergehäuse untergebrachte Auswertelektronik füllt dieses nur teilweise, bei längenveränderbaren Messlanzen kann hier noch eine Reserve an Signalkabel gelagert sein.

Das Messignalkabel wird auch zu einem stirnseitig im Messwertumformergehäuse angebrachten Stecker geführt, weil dieser einen Testanschluss für das kontrollierte Vorspannen hat.

Nachteile der bekannten Werkzeuginnendruckfühler in Formen können mit der erfindungsgemässen Messlanze beseitigt werden. Insbesondere der aufwendige Einbau am richtigen Ort entlang der Formhöhlung und die oft reissenden Signalkabel der Werkzeuginnendruckfühler fallen weg. Der Verlauf des Werkzeuginnendrucks während eines Pressvorgangs kann erfasst werden, ohne dass in jede Formhöhlung ein Aufnehmer gesetzt werden muss. Dies eröffnet für die Automatisierung von Pressen, insbesondere von Spritzgiess- und Druckgussmaschinen, neue Perspektiven. Die automatische Erfassung der wichtigen Prozess- und Maschinenparameter Schliesskraft und Werkzeuginnendruck wird beispielsweise vollelektrische Spritzpressen erlauben, die problemlos überwachbar sein werden.

Bezüglich des Messelements, welches separat oder in eine obenstehend beschriebene Messlanze integriert verwendet sein kann, zeichnet sich die erfindungsgemässe Lösung der Aufgabe dadurch aus, dass ein vorspannbarer Aufnehmer ein wenigstens innenseitig zylindrisch ausgebildetes Aufnehmergehäuse, ein gleitend darin geführtes Dehnungselement zur Abgabe eines kalibrierbaren elektrischen Signals, beidends des Dehungselements gleitend im Aufnehmergehäuse geführte Krafteinleitungselemente mit in vom Dehnungselement wegweisender Richtung ausgebildeten, stirnseitigen Aufschlagflächen zur Kraftaufnahme, wobei eines der Krafteinleitungselemente eine Aussparung zur Aufnahme eines die Signale des Dehnungselements zu einem Messumformer übermittelnden Signalkabel aufweist. Spezielle Ausführungsformen und Weiterausbildungen sind Gegenstand von abhängigen Ansprüchen.

In an sich bekannter Weise kann das Dehnungselement als elektromechanischer Wandler auf der Basis piezoelektrisch, piezoresistiv, kapazitiv, induktiv oder resistiv, d.h. mit Dehnungsmessstreifen erzeugter Signale ausgebildet sein.

Werden an das Messelement mit einem miniaturisierten Aufnehmer bezüglich der Messgenauigkeit und der Reproduktionsfähigkeit höchste Anforderungen gestellt, hat das Dehnungsel ement vorzugsweise wenigstens eine in Axialrichtung verlaufende, in Abstand vom Innenmantel des Aufnehmergehäuses verlaufende Fläche. Auf dieser Fläche ist ein Dünnschicht-Dehnungsmessstreifen angeordnet, welcher eine Messbrücke bildet. Das Aufbringen der Dünnschicht erfolgt bevorzugt durch kathodisches Aufsprühen.

Zwischen dem Dehnungselement, der Innenseite des Aufnehmergehäuses und den Stirnseiten der Krafteinführungselemente ist vorzugsweise ein elastischer, adhäsiver Füllstoff, welcher auch elektrisch isolierend ist, angeordnet. Als Füllstoff besonders geeignet ist ein dichtender, chemisch neutraler Kunststoff, welcher auch die Einzelteile des Aufnehmers zusammenhält.

Obwohl jedes erfindungsgemässe Messelement mit Aufnehmer und Signalkabel individuell in einer entsprechenden Bohrung vorgespannt werden kann, ist deren Verwendung als integrierender Bestandteil einer als Montagegarnitur eingesetzen Messlanze offensichtlich.

Die Aufgabe bezüglich des Verfahrens zur Dehnungsmessung einer metallischen Struktur wird erfindungsgemäss dadurch gelöst, dass eine Bohrung ausgespart, ein in eine Messlanze integrierter oder separater Aufnehmer mit angeschlossenem Signalkabel eingeführt und mit Hilfe einer Abstützvorrichtung mit einem Montagenippel kontrolliert in der Bohrung vorgespannt wird, bis ein vorausbestimmter Wert erreicht wird, der über der höchstmöglichen Arbeits-Dehnung der metallischen Struktur liegt.

Die für das erfindungsgemässe Verfahren eingesetzte Abstützvorrichtung besteht im Normalfall aus dem Bohrungsgrund und einem in entsprechendem Abstand davon ausgespar ten Gewinde an der Bohrungswandung. In diesem Fall hat der Montagenippel ein entsprechendes Aussengewinde, die erforderliche Vorspannung kann durch Drehen des Montagenippels erzeugt werden. Das Vorspannen kann kontrolliert erfolgen, weil das Signalkabel einen Testfaden hat, der laufend die Anzeige der ansteigenden Vorspannung erlaubt.

Ein weiterausbildendes Merkmal des Verfahrens besteht darin, dass der Aufnehmer in einer Zone homogenen Kraftflusses der metallischen Struktur, mit entsprechender Bohrungstiefe, plaziert wird.

Da bei Pressen, insbesondere bei Spritzgiess- und Druckgusspressen, nur Kräfte in axialer Richtung von Interesse sind, werden die Aufnehmer bevorzugt in allen vier Holmen plaziert. Zweckmässig wird dazu ein Montageset mit vier Messlanzen verwendet. Eine Plazierung der Aufnehmer in einem Kniehebel kann auch erfolgen.

Besonders vorteilhaft ist die Anordnung der Aufnehmer mit einer Distanz vor der letzten Krafteinwirkung, die mindestens dem Holmdurchmesser entspricht. Sind der Holmdurchmesser und der Elastizitätsmodul des verwendeten Metalls, bei Pressen üblicherweise eines Stahls, bekannt, kann mit der gemessenen Dehnung die im Holm wirkende Kraft berechnet werden. In diesem einachsigen Spannungszustand im Holm ist keine Kalibrierung notwendig:

$$F = A \cdot \epsilon \cdot E$$

wobei F die Holmbelastung, A der Holmquerschnitt, $\epsilon$ die Dehnung und E der Elastizitätsmodul bedeutet.

Eine gleichmässige Spannungsverteilung besteht in Zonen, die genügend weit von Querschnittänderungen und Krafteinleitungsstellen entfernt sind, also in Zonen homogenen Kraftflusses. Die hier nicht notwendige Kalibrierung be deutet eine grosse Arbeits- und Kostenersparnis.

Der Aufnehmer hat vorzugsweise die gleichen mechanischen Eigenschaften wie die umgebende metallische Struktur, welche aus einem Metall, insbesondere Stahl, besteht. In der Praxis sind Aufnehmer und metallische Struktur zweckmässig aus dem gleichen Metall der gleichen mechanischen Festigkeit ausgebildet. Dies gilt für das Aufnehmergehäuse und die Druckeinführungselemente und in der Regel auch für das Dehnungselement.

Zweckmässig wird eine Vorspannung angelegt, die etwa 300% der höchsten zu erwartenden Spannung entspricht.

Nach jedem Messzyklus wird die Messkette auf Null gesetzt, also tariert. Dadurch werden Temperatureinflüsse weitgehend el imi ni ert. Das Tarieren kann extern, aber auch intern ausgelöst werden, beispielsweise wird die interne Tarierung aktiviert, sobald das Signal eine gewisse Zeit unter einem zuvor festgelegten Wert gefallen ist. Bei einer Messlanze ist die Tarierung ebenfalls in die Auswertelektronik im Messwertumformergehäuse integriert, welche vom Anwender nicht mehr angetastet werden muss.

Wie bereits erwähnt weisen Bohrungen zum Anbringen von Aufnehmern oder Messlanzen in integrierter Bauweise zur Dehnungsmessung in metallischen Strukturen in axialer Richtung üblicherweise in unmittelbarer Nähe des Bohrungsgrundes ein Montagegewinde auf, welches im Zusammenwirken mit dem Bohrungsgrund dem Vorspannen des Dehnungsel ements dient. Beim Montagegewinde handelt es sich vorzugsweise um ein Feingewinde. Das Herstellen eines solchen Gewindes in einer tiefen Sackbohrung stellt erhebliche fertigungstechnische Probleme. Die Bohrung und das Montagegewinde sind so oft nicht wunschgemäss ausgeführt.

Eine Kontrolle der Bohrung und des Gewindes ist nur schwer oder nicht mehr durchführbar. Gerade die Bearbeitungsqualität des Bohrungsgrundes und des Montagegewindes sind jedoch für zuverlässige Dehnungsmessungen von grosser Bedeutung, weil Biegeeinflüsse, einseitige Beanspruchungen, Setzungen (Deformationen durch Eindruck) und Torsionsmomente beim Einschrauben die Sensordaten beeinflussen.

Weiter kann eine abgebrochene Gewindebohrerspitze im Bohrungsgrund stecken bleiben und die ganze metallische Struktur unbrauchbar machen.

Schliesslich üben die Gewindegänge eine gewisse Kerbwirkung auf die umgebende metallische Struktur aus. Bei wechselnder Belastung der Struktur können deshalb Risse, verursacht durch die Gewindegänge, entstehen, welche bei starker Beanspruchung die ganze tragende Struktur kollapsieren lassen können.

Nach einer besonders vorteilhaften Weiterausbildung des vorliegenden erfindungsgemässen Verfahrens können betreffend die Abstützvorrichtung bei einer tiefen Sackbohrung in einem wenigstens der axialen Dimension des Aufnehmers und eines allfälligen Einsatzes entsprechenden Abstands vom Bohrungsgrund erste Gewindeeinsätze mit Innengewinde als Vorspannteil rutsch- und kriechfest verspannt werden. Damit entfällt das heikle und aufwendige Ausdrehen eines Montagegewindes in der Bohrungswand. Das Messelement kann durch Drücken gegen den Bohrungsgrund mit Hilfe von leicht montier- und demontierbaren ersten Gewindeeinsätzen vorgespannt werden.

Die Verspannung von ersten Gewindeeinsätzen in einer Bohrung hat noch eine weitere Bedeutung. Wird zur Dehnungsmessung in einer metallischen Struktur eine Bohrung von beispielsweise 16 mm angebracht, kann nach bisher üblichen Verfahren aus fertigungstechnischen Gründen mit grossem Aufwand lediglich ein M10-Gewinde eingedreht werden. Für das Abstützen des Aufnehmers auf dem Bohrungsgrund kann dann eine Kugel von lediglich 8,5 mm Durchmesser verwendet werden, was wegen des verhältnismässig kleinen Radius eine starke Setzung bedeutet. Nach dem verbesserten Verfahren der vorliegenden Erfindung kann in eine Bohrung von 16 mm Durchmesser eine an der Bohrungswand anliegende Kugel von ebenfalls 16 mm Durchmesser eingebracht und erst nachher die ersten Gewindeeinsätze montiert werden. Neben den fertigungstechnischen Vorteilen kann also eine grössere Kugel mit wesentlich kleinerer Setzung verwendet werden.

Ist die Bohrung in einer metallischen Struktur so tief, dass sie zur durchgehenden Bohrung wird, können in weitergehender Ausgestaltung des vorstehend beschriebenen Verfahrens betreffend die Abstützung in einer vorausbestimmten Tiefe wenigstens einer Oeffnung zweite Gewindeeinsätze mit Innengewinde als Endanschlag und wenigstens in einem Abstand, entsprechend der axialen Ausdehnung des Aufnehmers und eines allfälligen Einsatzes weniger tief liegende erste Gewindeeinsätze mit Innengewinde als Vorspannteil rutsch-und kriechfest verspannt werden.

Damit wird die Dehnungsmessung einer metallischen Struktur von einer Bohrungstiefe völlig unabhängig. Montier- und demontierbare Gewindeeinsätze können in jeder Tiefe ein- oder beseitig der Bohrung montiert werden, ggf. nach dem Einsetzen einer grossen Kugel mit gleichem Durchmesser wie die Bohrung.

Die beidseitige Anbringung von ersten und zweiten Gewindeeinsätzen in einer durchgehenden Bohrung erlaubt Spannungsanalysen einer metallischen Struktur, wobei die Lage und der Abstand der beiden ersten und zweiten Gewindeeinsätze frei variierbar sind. Es kann also ein breites Analysespektrum abgedeckt werden.

Die ersten und zweiten Gewindeeinsätze, welche ein im we sentlich hülsenförmiges, starres Innenteil mit einem Gewinde aufweisen, haben vorzugsweise einen sich in Richtung der Oeffnung der Sackbohrung oder der benachbarten Oeffnung der Durchgangsbohrung verengenden Aussenkonus. Das zweckmässig ebenfalls hülsenförmige, elastische Aussenteil hat einen auf dem Aussenkonus des Innenteils vollflächig aufliegenden Innenkonus und einen mit der Bohrung verspannbaren Aussenmantel , welcher also zylinderförmig ausgebildet ist.

Das Aussenteil der Gewindeeinsätze wird vorteilhaft mit gerilltem, geriffeltem oder genopptem Aussenmantel eingesetzt. Damit diese Oberflächenerhebungen besser in der Bohrungswandung verhaken können, sind die Rippen, Riffelung oder Noppen zweckmässig gehärtet.

Die elastische Deformation des Aussenteils der Gewindeeinsätze kann mit einem in Axialrichtung der Bohrung verlaufenden, durchgehenden Schlitz und/oder wenigstens einem nicht durchgehenden Schlitz verbessert werden.

Das beim Verspannen der Gewindeeinsätze nicht deformierte Innenteil besteht vorzugsweise aus einem mechanisch festeren, insbesonderen auch wechsellastfesteren Material als die umgebende metallische Struktur und das Aussenteil.

Durch die freie Wahl des Materials der Gewindeeinsätze kann unabhängig von der die Bohrungswandung bildenden metallischen Struktur eine optimale Wahl getroffen werden. So kann beispielsweise das Innenteil der Gewindeeinsätze aus einem Material mit sehr hoher Wechsellastfestigkeit bestehen, ohne dass die umgebende metallische Struktur von derselben Qualität sein muss.

Analog zum äusseren Mantel des Aussenteils kann beim Innenteil der Gewindeeinsätze ein äusserer Konus verwendet werden, der gerillt, geriffelt oder genoppt ausgebildet ist, welche Rippen, Riffelung oder Noppen sich beim Verspannen der Gewindeeinsätze im Innenkonus eines weicher ausgebildeten Aussenteils verhaken.

Der konische Teil der Gewindeeinsätze, insbesondere des Innenteils, kann mit einem Gleitlack oder einer Gleitpaste beschichtet werden.

Abschliessend können die wesentlichen Vorteile der Erfindung wie folgt zusammengefasst werden

- In einer Presse, insbesondere in einer Spritzgiess- oder Druckgussmaschine, kann der Druckverlauf im Werkzeuginnern während des Arbeitsprozesses mit einer als Montageset ausgebildeten Messlanze kontinuierlich erfasst werden, ohne dass in jeder Form ein Aufnehmer eingesetzt werden muss.

- Die Messungen erfolgen in allen Holmen einer Presse in einer Zone homogenen Kraftflusses. Die Holmbelastung kann direkt, ohne Kalibrierung, aus der Holmdehnung berechnet werden.

- Für die Automatisierung von Pressen aller Art eröffnet ein miniaturisiertes und hochpräzises Messwerkzeug mit hoher Lebensdauer, das auf einfachste Weise montiert und demontiert werden kann, neue Möglichkeiten.

- Das Vorspannen mit Abstützvorrichtungen in Form von Gewindeeinsätzen in tiefen und durchgehenden Bohrungen ermöglicht die Dehnungsmessung in metallischen Strukturen aller Art, ohne dass aufwendige, nicht kontrollierbare Vorkehrungen getroffen werden müssen, z.B. Gewindedrehen in grosser Bohrungstiefe, wie dies der Einsatz von Aufnehmern in einer Zone homogenen Kraftflusses erforderlich macht.

Die Erfindung wird anhand von in der Zeichnung dargestellten Ausführungsbeispielen, welche auch Gegenstand von abhängigen Ansprüchen sind, näher erläutert. Es zeigen schematisch:

- Fig. 1 eine aufgeschnittene Ansicht einer Messlanze,

- Fig. 2 einen Axialschnitt durch eine in einem Pressenholm eingesetzte Messlanze,

- Fig. 3 einen Axialschnitt durch einen in eine Bohrung eingesetzten Aufnehmer,

- Fig. 4 eine Variante von Fig. 3,

- Fig. 5 einen Querschnitt durch einen Aufnehmer,

- Fig. 6 eine Variante des Einsatzes gemäss Fig. 4,

- Fig. 7 einen Axialschnitt durch eine tiefe Sackbohrung mit ersten Gewindeeinsätzen,

- Fig. 8 eine Variante von Fig. 7,

- Fig. 9 einen Axialschnitt einer durchgehenden Bohrung mit ersten und zweiten Gewindeeinsätzen,

- Fig. 10 eine Variante von Fig. 9 mit von beiden Seiten eingeführten ersten und zweiten Gewindeeinsätzen,

- Fig. 11 eine perspektivische Ansicht eines Aussenteils eines Gewindeeinsatzes,

- Fig. 12 einen Axialschnitt durch ein in eine Bohrung eingesetztes Montagewerkzeug für Gewindeeinsätze, und

- Fig. 13 eine Ansicht eines Montagewerkzeugs für Gewindeeinsätze.

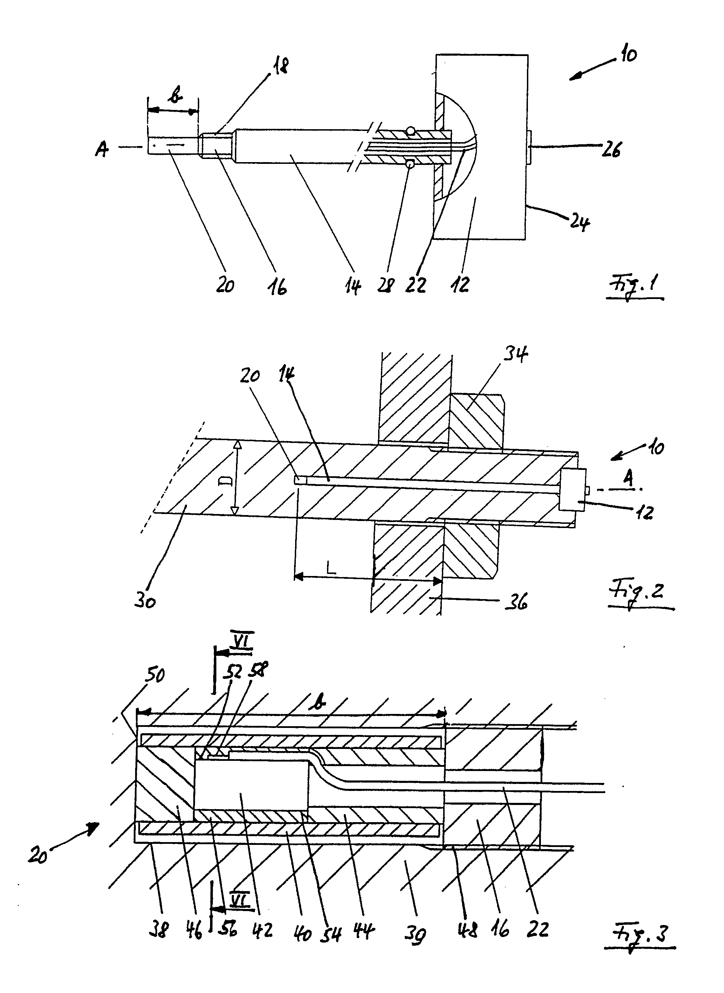

Die in Fig. 1 dargestellte Messlanze 10 ist eine als integrierte Baueinheit ausgebildetet Montagegarnitur. Ein Messwertumformergehäuse 12 ist fest mit einem koaxialen Verbindungsrohr 14, auch Distanzrohr genannt, verbunden.

Das massiv ausgebildete, gegebenenfalls längenveränderbare, jedoch immer drehfeste Verbindungsrohr 14 ist auf der vom Messwertumformergehäuse 12 abgewandten Stirnseite fest mit einer Montageschraube 16 verbunden. Diese Montageschraube 16 mit einem Aussengewinde 18 kann auch einstückig mit dem Verbindungsrohr 14 ausgebildet sein.

Andernends ist die Montageschraube 16 mit einem Aufnehmer derart verbunden, dass er in axialer Richtung gehalten wird, sich aber um die eigene Achse drehen kann, ohne dass das Verbindungsrohr 14 mitdreht. Dies kann entweder mechanisch mittels eines Splints an der Montageschraube 16, einer Eindrehung am Aufnehmer 20 oder durch Adhäsion mittels einer geeigneten Passe erfolgen. Nach einer andern Variante dreht der Aufnehmer 20 mit dem Verbindungsrohr 14, wenn die Messlanze 10 zum Anpressen des Aufnehmers 20 auf einen Bohrungsgrund erfolgt.

Vom Aufnehmer 20 führen Signalkabel 22 durch das Verbindungsrohr 14 zum Messwertumformergehäuse 12. Der Aufnehmer und die Signalkabel 22 bilden eine Messeinheit, welche in die Messlanze 20 integriert oder auch selbständig in einer Bohrung eingesetzt und der Aufnehmer vorgespannt werden kann.

In der Stirnfläche 24 des Messwertumformergehäuses 12 ist ein Stecker 26 angeordnet, im vorliegenden Fall ein 6-Pol-Stecker mit einem Ausgang für ein Testsignal

Der Aussenmantel des Verbindungsrohrs 14 hat in Richtung des Messwertumformergehäuses 12 eine Ringnut, in welcher ein der Vibrationsdämpfung dienender O-Ring 28 angeordnet ist. Beim Einführen der Messlanze 10 in eine Montagebohrung wird der O-Ring 28 gequetscht.

Das Verbindungsrohr 14 ist mit bekannten Mitteln fest mit dem Messwertumformergehäuse 12 verbunden. Die Länge des Verbindungsrohrs 14 kann frei gewählt werden oder verstellbar sein.

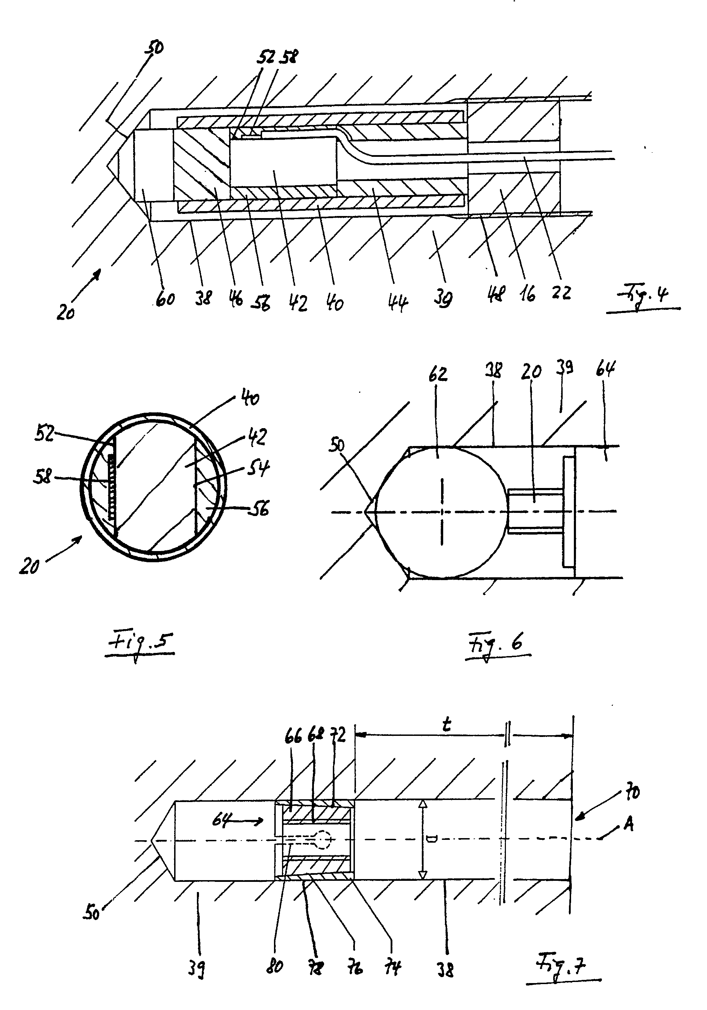

Die Montageschraube 16 ist über das Aussengewinde 18 fest mit der metallischen Struktur, gemäss Fig. 2 dem Holm 30, verbunden. Die Dehnung wird über die Länge b des Aufnehmers 20 in Richtung der Längsachse A gemessen. Der Aufnehmer ist einends auf den Bohrungsgrund oder einen Einsatz gepresst, andernends auf die Montageschraube 16.

Das Messwertumformergehäuse 12 ist so ausgebildet, dass es auch zum Vorspannen des Ausnehmers des Messelements verwendet werden kann. In der Regel wird das Messwertumformergehäuse 12 von Hand gedreht, falls es versenkt ist mit einem Montageschlüssel.

Wenn das Messelement im Zusammenwirken mit der Auswertelektronik im Messwertumformergehäuse 12 eine genügend hohe Auflösung hat, kann durch unmittelbares Tarieren der Messkette nach einer Vervielfachung der Auflösung ein Signal gemessen werden, welches dem Werkzeuginnendrucksignal ziemlich genau entspricht, beispielsweise nach dem Schliessvorgang der Form einer Presse.

Fig. 2 zeigt eine in einen Holm 30 einer Presse koaxial (Achse A) eingesetzte Messlanze 10. Das Messwertumformergehäuse 12 ist in der Stirnseite des Holms 30 versenkt. Ueber ein stirnseitig am Holm 30 angebrachtes Aussengewinde 32 ist dieser mittels einer Verstellmutter 34 auf einer Aufspannplatte 36 befestigt.

Damit der Aufnehmer 20 in einer Zone homogenen Kraftflusses liegt, ist das Verbindungsrohr 14 der Messlanze 10 so vorgesehen, dass der Aufnehmer 20 mindestens um D vor der letzten Krafteinleitung in den Holm 30 zu liegen kommt, wobei D hier der Holmdurchmesser ist. Die letzte Krafteinleitung ist jeweils entweder bei der Verstellmutter 34 oder an der inneren Kante der Aufspannplatte 36. L ist also gleich wie oder grösser als D.

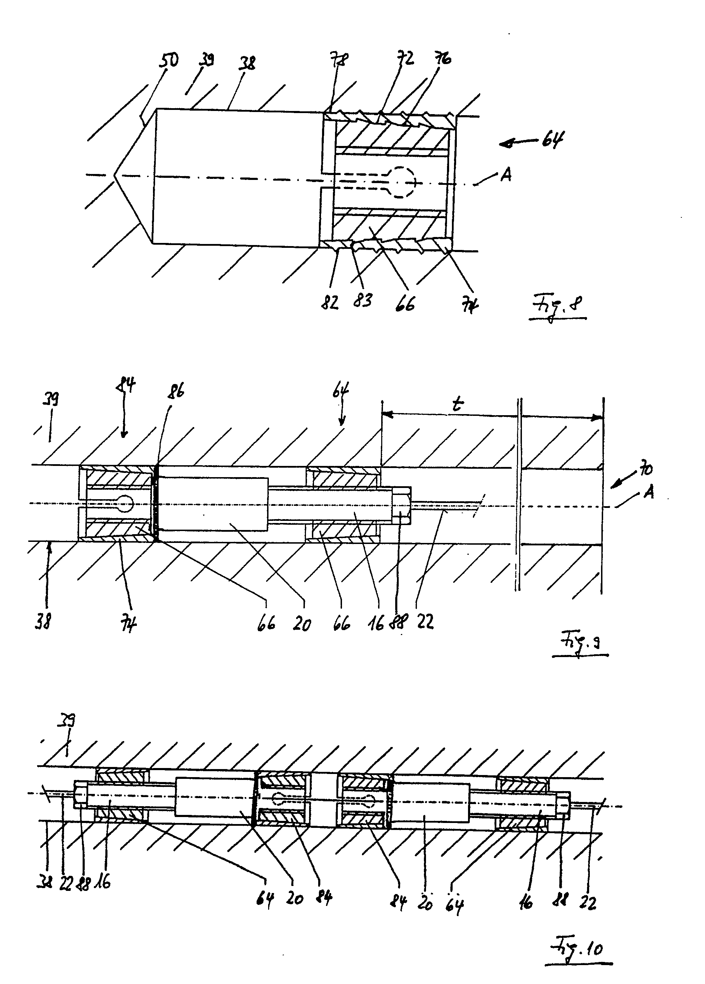

In Fig. 3 ist vergrössert ein in einer Bohrung 38 einer metallischen Struktur 39, im vorliegenden Fall als Holm 30 ausgebildet, eingespannt. Mit dem fest verbundenen Signalkabel 22 bildet der Aufnehmer 20 eine einbaubare Messeinheit.

Der Aufnehmer 20 besteht aus einem Aufnehmergehäuse 40, eine dünnwandige Stahlhülse einer Wandstärke von etwa 0,1 mm, eines Aussendurchmessers von etwa 5 mm und einer Länge von etwa 15 mm. In das Aufnehmergehäuse 40 praktisch spielfrei eingeschoben sind ein Dehnungselement 42 und an beide Stirnseiten anliegende Krafteinleitungselemente 44, 46.

Ein Montagenippel ist ausgebildet als Montageschraube 16. Wird diese Montageschraube 16, welche mit ihrem Aussengewinde in ein Innengewinde 48 der Bohrung 38 eingreift, gedreht, drückt der Montagenippel auf den Aufnehmer 20 und presst diesen gegen den Bohrunggrund 50, welcher plan bearbeitet ist. Dadurch wird das kraftempfindliche Dehnungselement 42 über die Krafteinleitungselemente 44, 46, welche die Stirnseiten des Aufnehmergehäuses überragen, vorgespannt.

Das im wesentlichen zylinderförmig ausgebildete Dehnungselement 42 weist wenigstens eine parallel zur Achse A verlaufende, ebene Fläche 52, 54 auf. Die Hohlräume zwischen den Flächen 52, 54 und dem Innenmantel des Aufnehmergehäuses 40, stirnseitig begrenzt durch die Krafteinleitungselemente 44, 46, sind mit einem elastischen, adhäsiven Füllstoff 56 gefüllt.

Auf die Fläche 52 ist eine Messbrücke 58 kathodisch aufgesprüht, ein Dünnschicht-Dehnungsmessstreifen (DMS), welcher bei minimsten Längeveränderungen des Dehnungselements 42 elektrische Signale erzeugt, die vom Signalkabel 22 abgeleitet werden. Die Messbrücke 58 ist in den Füllstoff 56 eingebettet.

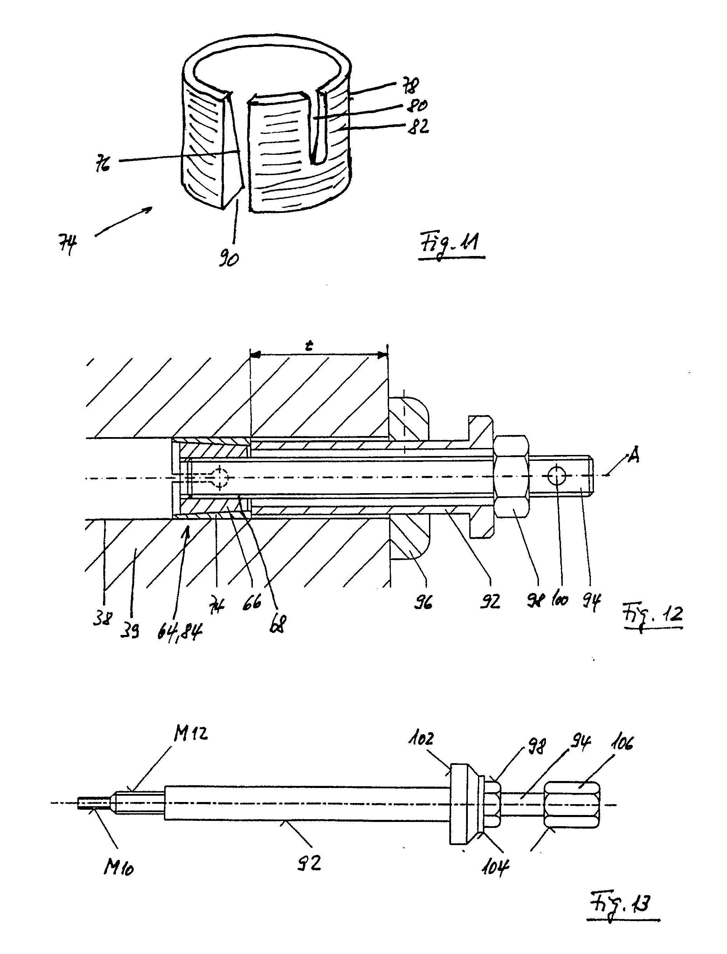

Im Vergleich zu Fig. 3 besteht der einzige Unterschied von Fig. 4 darin, dass der Bohrungsgrund 50 kegelförmig ausgebildet ist, entsprechend einer durch einen gewöhnlichen Spiralbohrer erzeugten Bohrung 38. Das Krafteinleitungselement 46 weist einen Einsatz 60 auf, welcher im wesentlichen zylinderförmig, mit in Richtung des Bohrungsgrundes 50 formschlüssig angedrehtem Konus, ausgebildet ist.

Fig. 5 präzisiert die geometrische Form des im Aufnehmergehäuse 40 praktisch spiel frei gleitenden Dehnungselements 42. Dieses weist zwei axenparallele, ebene Flächen 52, 54 auf, auf der ersteren ist eine Messbrücke 58 aufgesputtert. Beide Hohlräume sind mit einem Füllstoff 56 gefüllt.

In Fig. 6 ist eine in einer metallischen Struktur 39 angebrachte Bohrung 38 mit kegelförmigem Bohrungsgrund 50 dargestellt. Im vorliegenden Fall hat die Bohrung einen Durchmesser von 16 mm. In diese Bohrung 38 ist eine Kugel 62 gleichen Durchmessers eingebracht.

In der Bohrung 38 werden weiter, nach dem Einführen der Kugel 62, Gewindeeinsätze 64 mit einem Innengewinde verspannt, welche später im Detail dargestellt werden. Der Aufnehmer 20 ist verspannbar, bei Kraftanwendung drückt er die Kugel 62 auf den Bohrungsgrund 50. Im Gegensatz zu den vorhergehenden Ausführungsformen drückt der Aufnehmer 20 nicht direkt, sondern über die grosse Kugel 62 auf den Bohrungsgrund 50, was kleine Setzungen zur Folge hat.

Die in Fig. 7 dargestellte tiefe Sackbohrung 38 in einer metallischen Struktur 39 hat einen Durchmesser D. In der Bohrung 38 sind Gewindeeinsätze 64 verspannt. Vorher eingebrachte Montageteile, wie ein Aufnehmer 20 und ggf. eine Kugel 62 sind nicht gezeichnet.

Ein nicht deformierbares Innenteil 66 ist im wesentlichen hülsenförmig ausgebildet und hat ein Innengewinde 68 und einen sich in Richtung der Oeffnung 70 der Bohrung 38 verengenden Aussenkonus 72. Das ebenfalls im wesentlichen hülsenförmig ausgebildete Aussenteil 74 der Gewindeeinsätze 64 ist elastisch. Der Innenkonus 76 des Aussenteils 74 liegt formschlüssig auf dem Aussenkonus 72 des Innenteils 66 auf. Durch die beiden unter Krafteinwirkung übereinandergeschobenen Konusflächen 72, 76 ist der zylinderförmige Aussenmantel 78 mit der Wandung der Bohrung 38 verspannt.

Die Aussenhülse weist einen in Richtung der Achse A verlaufenden, nicht durchgehenden Schlitz 80 auf, welcher die elastische Dehnung erleichtert.

Offensichtlich können die Gewindeeinsätze 64 in jeder beliebigen Tiefe t der Bohrung 38 verspannt und als Vorspannteil benutzt werden.

Die Variante gemäss Fig. 8 zeigt Mittel zur Verbesserung des rutschfesten Verspannens von Gewindeeinsätzen 64 in einer Bohrung 38 einer metallischen Struktur 39, entspricht jedoch im wesentlichen Fig. 7. Der Aussenmantel 78 des Aussenteils 74 weist parallel entlang des Umfangs verlaufende, gehärtete Querrippen 82 auf, welche in der Wandung der Bohrung 38 entsprechende Rillen erzeugen. Das mechanisch feste Innenteil 66 weist an seinem Aussenkonus 72 ebenfalls Querrippen 83 auf, wobei sich beim Verspannen das harte Material des Innenteils 66 in den nicht gehärteten Innenkonus 76 des Aussenteils 74 presst und in diesem Rillen formt.

In Fig. 9 sind Abstützvorrichtungen zum Vorspannen eines Aufnehmers 20 in einer durchgehenden Bohrung 38 einer metallischen Struktur 39 dargestellt. In einer wählbaren Tiefe t von der Oeffnung 70 der Bohrung 38 sind erste Gewindeeinsätze 64 verspannt, um wenigstens die Länge b (Fig. 1, 3) des Aufnehmers b zweite Gewindeeinsätze 84 als Endanschlag. Die ersten und zweiten Gewindeeinsätze 64, 84 entsprechen im Detail Fig. 7 oder 8, sie werden selbstverständlich in der Reihenfolge zweite, dann erste Gewindeeinsätze montiert.

Ein auf die zweiten Gewindeeinsätze 84 gelegter Zwischenring 86 verhindert, dass beim Vorspannen des Aufnehmers 20 das Innenteil 66 aus dem Aussenteil 74 gedrückt, und der Endanschlag nicht mehr verspannt ist. Bei den Gewindeeinsätzen 64 ist kein Zwischenring 86 notwendig, weil der Innenteil 66 nicht hinausgedrückt werden kann.

Die Montageschraube 16 kann gedreht werden, indem ein Verbindungsrohr 14 (Fig. 1), welches das Signalkabel 22 aufnimmt, formschlüssig auf einen Schraubenkopf 88 gesteckt wird. Beim Drehen der Montageschraube 16 wird der Aufnehmer 20 kontrolliert vorgespannt.

Fig. 10 zeigt eine durchgehende Bohrung 38 in einer metallischen Struktur 39, welche zwei erste und zweite Gewindeeinsätze 64, 84 zum Vorspannen von Aufnehmern 20 aufweist. Die als Vorspannteil eingesetzten ersten Gewindeeinsätze 64 sind in bezug auf die beiden Bohrungsöffnungen jeweils aussenliegend und werden nach den innenliegenden, als Endanschlag dienenden zweiten Gewindeeinsätzen 84 montiert.

In Fig. 11 ist zur besseren Veranschaulichung ein Aussenteil 74 von ersten oder zweiten Gewindeeinsätzen 64, 84 dargestellt. Der Aussenmantel 78 weist Querrippen 82 auf, der Innenkonus 76 ist glatt ausgebildet. Zur besseren Ausdehnung des Aussenteils 74 ist ein in Axialrichtung verlaufender, durchgehender Längsschlitz 90 ausgebildet. Von einem oder mehreren nicht durchgehenden, ebenfalls in axialer Richtung verlaufenden Schlitzen 80 ist lediglich einer gezeichnet.

Fig. 12 zeigt eine eingeführte Einbauvorrichtung für verspannbare erste und zweite Gewindeeinsätze 64, 84 in einer Bohrung 38 einer metallischen Struktur 39, wobei die Bohrung kein eingedrehtes Gewinde aufweist.

Die Gewindeeinsätze 64 oder 84 werden mittels eines Montagerohres 82 auf eine vorausbestimmte Tiefe t, welche verkürzt dargestellt ist, eingeführt. Eine beidends aus den Stirnseiten des Montagerohrs 92 hinausragende Gewindestange 94 drückt die Gewindeeinsätze 64 oder 84 leicht an die Wandung der Bohrung 38, wodurch das Innenteil 66 und das Aussenteil 74 zusammengehalten werden. Die Gewindeeinsätze 64, 84 können auch schon vorgängig etwas verspannt werden, um ein Auseinanderfallen zu verhindern. Eine nicht sichtbare Skalierung am Montagerohr 92 erlaubt das exakte Positionieren der Gewindeeinsätze 64 oder 84 in der Bohrung 38. Ein Feststellring 96 wird mit geeigneten Mitteln, beispielsweise einer Feststellschraube, in der eingestellten Position befestigt, um ein axiales Verschieben des Montagerohrs 92 zu verhindern.

Das Innenteil 66 der Gewindeeinsätze 64 oder 84 wird nun durch Drehen an einer Gewindemutter 98 in das Aussenteil 74 gezogen, wobei die Gewindestange 94 am Drehen gehindert werden muss, beispielsweise mittels eines Quersplints 100.

Die Verspannung des Innen- und Aussenteils 66, 74 der Gewindeeinsätze 64, 84 kann je nach Materialkombination variiert werden.

Nach erfolgtem Verspannen eines ersten oder zweiten Gewindeeinsatzes 64, 84 wird die Gewindemutter 98 gelöst, die Gewindestange aus dem Innenteil 66 gedreht und zusammen mit dem Montagerohr aus der Bohrung gezogen.

Bei ersten Gewindeeinsätzen 64 dient das Innengewinde der Montageschraube zum Vorspannen des Aufnehmers 20 (Fig. 1).

In Fig. 13 ist eine Variante eines freien Montagesets von Fig. 12 für Gewindeeinsätze dargestellt, welcher für eine feste Montagetiefe geeignet ist. Aus diesem Grunde weist das Montagerohr 92 einen festen Anschlag 102 auf. Zwischen Spannmutter 98 und Anschlag 102 ist eine Zwischenscheibe 104 angeordnet, das Feststellen der Gewindestange 94 erfolgt mit einer Kontermutter 106.

Die Einbauvorrichtungen gemäss Fig. 12 und 13, als fertige Montagesets ausgebildet, und ihr Einsatz sind wesentliche Elemente zur universellen Ausübung der vorliegenden Erfindung.

## Ansprüche

1. Anordnung zum elektrischen Messen positiver und negativer Dehnungen von metallischen Strukturen (39) an Pressen, insbesondere zur Ermittlung der Schliess- und/oder Zuhaltekraft an Spritzgiess- und Druckgussmaschinen
, dadurch gekennzeichnet, dass
die Anordnung aus einer Messlanze (10) in integrierter Bauweise besteht, in welcher ein einends angeordneter, vorspannbarer Aufnehmer (20) eines dehnungsempfindlichen, elektrische Signale erzeugenden Messel ements über ein bezüglich seiner Länge verwendungsspezifisch ausgebildetes Verbindungsrohr (14) andernends fest mit einem Messwertumformergehäuse (12) verbunden ist, welches eine autonome Auswertelektronik enthält und dem Erzeugen der Vorspannung dient, wobei ein Signalkabel (22) durch das Verbindungsrohr (14) vom Aufnehmer (20) zur Auswertelektronik und zu einem Stecker (26) im Messwertumformergehäuse (12) geführt ist.

2. Anordnung nach Anspruch 1, dadurch gekennzeichnet, dass das Verbindungsrohr (14) neben dem Aufnehmer (20) eine Montageschraube (16) hat, die mit dem Verbindungsrohr (14) fest verbunden oder mit diesem einstückig ausgebildet ist.

3. Anordnung nach Anspruch 1 oder 2, dadurch gekennzeichnet, dass das Verbindungsrohr (14) in Richtung des Messwertumformergehäuses (12) ein elastisches Element, vorzugsweise einen teilweise in einer Ringnut versenkten O-Ring (28), aufweist.

4. Anordnung nach einem der Ansprüche 1 bis 3, dadurch gekennzeichnet, dass das Verbindungsrohr (14) längenver stellbar ausgebildet ist, jedoch drehfest bleibt.

5. Anordnung nach einem der Ansprüche 1 bis 4, dadurch gekennzeichnet, dass das Signalkabel (22) zu einem stirnseitig im Messwertumformergehäuse (12) angeordneten 6-Pol-Stecker (26) mit einem Testausgang eines Signals für das kontrollierte Vorspannen führt.

6. Messelement zum Messen positiver und negativer Dehnungen von metallischen Strukturen (39) an Pressen, insbesondere zur Ermittlung der Schliess- und/oder Zuhaltekraft an Spritzgiess- und Druckgussmaschinen, separat oder in einer Anordnung gemäss einem der Ansprüche 1 - 5 eingesetzt, dadurch gekennzeichnet, dass
ein vorspannbarer Aufnehmer (20) ein wenigstens innenseitig zylindrisch ausgebildetes Aufnehmergehäuse (40), ein gleitend darin geführtes Dehnungselement (42) zur Abgabe eines kalibrierbaren elektrischen Signals, beidends des Dehnungselements (42) gleitend im Aufnehmergehäuse (40) geführte Krafteinleitungselemente (44,46) mit in vom Dehnungselement (42) wegweisender Richtung ausgebildeten, stirnseitigen Aufschlagflächen zur Kraftaufnahme, wobei eines der Krafteinleitungselemente (44,46) eine Aussparung zur Aufnahme eines die Signale des Dehnungselements (42) zu einem Messwertumformer übermittelnden Signalkabels (22) aufweist.

7. Messelement nach Anspruch 6, dadurch gekennzeichnet, dass das Dehnungselement (42) als elektromechanischer Wandler auf der Basis piezoelektisch, piezoresistiv, kapazitiv, induktiv oder resistiv, vorzugsweise resistiv mit Dünnschicht-Dehnungsmessstreifen, erzeugter Signale ausgebildet ist.

8. Messelement nach Anspruch 6 oder 7, dadurch gekennzeichnet, dass das Dehnungselement (42) wenigstens eine in Axialrichtung (A), in Abstand vom Innenmantel des Aufnehmergehäuses (40) verlaufende Fläche (52 oder 54), bevorzugt zwei parallele Flächen (52,54), aufweist, und auf einer Fläche (52) eine vorzugsweise kathodisch aufgesprühte Messbrücke (58) angeordnet ist.

9. Messelement nach einem der Ansprüche 6 bis 8, dadurch gekennzeichnet, dass zwischen dem Dehnungselement (42), dem Innenmantel des Aufnehmergehäuses (40) und den Stirnseiten der Krafteinführungselemente (44,46) ein elastischer, adhäsiver und elektrisch isolierender Füllstoff, vorzugsweise aus einem dichtenden, chemisch neutralen Kunststoff, eingefüllt ist.

10. Messelement nach einem der Ansprüche 6 bis 9, dadurch gekennzeichnet, dass das Dehnungselement (42) und die Krafteinleitungselemente (44,46) praktisch spiel frei auf der Innenseite des Aufnehmergehäuses (40) gleitend ausgebildet sind.

11. Messelement nach einem der Ansprüche 6 bis 10, dadurch gekennzeichnet, dass das Aufnehmergehäuse (40) als beidends offene Hülse ausgebildet ist.

12. Messelement nach einem der Ansprüche 6 bis 11, dadurch gekennzeichnet, dass das Signalkabel (22) aufnehmende Krafteinleitungselement (44), vorzugsweise eine dickwandige Hülse mit einer stirnseitigen, radialen Nut für das Kabel in Richtung des Dehnungselements (42), einstückig mit einem Montagenippel (16), welcher zweckmässig ein Schraubengewinde aufweist, zum Anbringen der Vorspannung ausgebildet ist.

13. Messelement nach einem der Ansprüche 6 bis 12, dadurch gekennzeichnet, dass das Signalkabel (22) nicht aufneh mende Krafteinleitungselement (46) bzw. ein in vom Dehnungselement (42) wegweisender Richtung aufgebrachter oder angeformter Einsatz (60) eine entsprechend einem Bohrungsgrund (50) oder einer in die Bohrung (38) eingebrachten Kugel (62) optimal ausgebildete Aufschlagfläche hat, vorzugsweise eine vertikal zur Axialrichtung (A) verlaufende flache, eine konusförmige oder eine kugelabschnittförmige.

14. Verfahren zum Messen der Dehnung einer metallischen Struktur (39) an Pressen, insbesondere in Längrrichtung (A) der Holme (30) von Spritzgiess- und Druckgussmaschinen, mit einer Anordnung nach einem der Ansprüche 1 bis 5 und/oder mit einem Messelement nach einem der Ansprüche 6 bis 13,
dadurch gekennzeichnet, dass
eine Bohrung (38) aus der metallischen Struktur (39) ausgespart, ein in eine Messlanze (10) integrierter oder separater Aufnehmer (20) mit einem angeschlossenen Signalkabel (22) eingeführt und mit Hilfe einer Abstützvorrichtung mittels einer Montageschraube (16) kontrolliert in der Bohrung (38) vorgespannt wird, bis ein vorausbestimmter Wert erreicht wird, der über der höchstmöglichen Dehnung der metallischen Struktur (39) liegt.

15. Verfahren nach Anspruch 14, dadurch gekennzeichnet, dass der Aufnehmer (20) in einer Zone homogenen Kraftflusses der metallischen Struktur (39), mit entsprechender Bohrungstiefe (t) plaziert wird, vorzugsweise in wenigstens einem Holm (30) einer Presse mit einer Distanz vor der letzten Krafteinwirkung, die mindestens dem Holmdurchmesser (D) entspricht.

16. Verfahren nach Anspruch 14 oder 15, dadurch gekennzeichnet, dass ein Aufnehmer (20), der ein Aufnehmergehäuse (40) und Druckeinführungselemente (44,46), allenfalls auch ein Dehnungselement (42), mit den gleichen mechanischen Eigenschaften hat und vorzugsweise aus dem gleichen Metall wie die metallische Struktur (39), insbesondere aus Stahl, besteht, eingesetzt wird.

17. Verfahren nach einem der Ansprüche 14 bis 16, dadurch gekennzeichnet, dass die Messkette auf eine Vorspannung von etwa 300% der höchsten zu erwartenden Spannung gebracht und vorzugsweise nach jedem Messzyklus tariert wird.

18. Verfahren nach einem der Ansprüche 14 bis 17, dadurch gekennzeichnet, dass betreffend die Abstützvorrichtung bei einer tiefen Sackbohrung (38) in einem wenigstens der axialen Ausdehnung (b) des Aufnehmers (42) und eines allfälligen Einsatzes (60) bzw. einer Kugel (62) entsprechenden Abstand vom Bohrungsgrund (50) erste Gewindeeinsätze (64) mit Innengewinde (68) als Vorspannteil rutsch- und kriechfest verspannt werden.

19. Verfahren nach einem der Ansprüche 14 bis 17, dadurch gekennzeichnet, dass betreffend die Abstützvorrichtung bei einer Durchgangsbohrung (38) in einer vorausbestimmten Tiefe wenigstens einer Oeffnung (70) zweite Gewindeeinsätze (84) als Endanschlag und wenigstens in einem Abstand, entsprechend der axialen Ausdehnung (b) des Aufnehmers (42) und eines allfälligen Einsatzes (60) bzw. einer Kugel (62), weniger tief liegende erste Gewindeeinsätze (84) als Vorspannteil rutsch- und kriechfest verspannt werden.

20. Verfahren nach Anspruch 18 oder 19, dadurch gekennzeichnet, dass erste und zweite Gewindeeinsätze (64,84), welche ein im wesentlichen hülsenförmiges starres Innenteil (66) mit dem Innengewinde (68) und einem sich in Richtung der Oeffnung (70) der Sackbohrung oder der benach barten Oeffnung (70) der Durchgangsbohrung verengenden Aussenkonus (72) und ein im wesentlichen hülsenförmiges, elastisches Aussenteil (74) mit einem auf dem Aussenkonus (72) des Innenteils (66) vollflächig aufliegenden Innenkonus (76) und einem mit der Bohrung flächenbündigen Aussenmantel (78) umfassen, verspannt werden.

21. Verfahren nach einem der Ansprüche 18 bis 20, dadurch gekennzeichnet, dass das Aussenteil (74) der Gewindeeinsätze (64,84) mit gerilltem, geriffeltem oder genopptem Aussenmantel (78) eingesetzt wird, vorzugsweise mit gehärteten Rippen (82), Riffelung oder Noppen.

22. Verfahren nach einem der Ansprüche 18 bis 21, dadurch gekennzeichnet, dass das Aussenteil (74) der Gewindeeinsätze (64,84) mit einem in Axialrichtung (A) der Bohrung (38) verlaufenden, durchgehenden Längsschlitz (90) und/oder wenigstens einem, nicht durchgehenden, ebenfalls in Axialrichtung (A) verlaufenden Schlitz (80) eingesetzt wird.

23. Verfahren nach einem der Ansprüche 18 bis 22, dadurch gekennzeichnet, dass das Innenteil (66) der Gewindeeinsätze (64,84) aus einem mechanisch festeren, vorzugsweise auch wechsellastfesteren Material, als die metallische Struktur (39) und das Aussenteil (74) eingesetzt wird.

24. Verfahren nach einem der Ansprüche 18 bis 23, dadurch gekennzeichnet, dass das Innenteil (66) mit gerilltem, geriffeltem oder genopptem Aussenkonus (72) eingesetzt wird, welche Rippen (83), Riffelung oder Noppen sich beim Verspannen der Gewindeeinsätze (64,84) im Innenkonus (76) des weicheren Aussenteils (74) verhaken.

Fig.1

Fig.2

Fig.3

Fig. 4

Fig.5

Fig. 6

Fig.7

Fig. 8

Fig. 9

Fig. 10

13

Fig. 11

Fig. 12

Fig. 13